(19) Europäisches Patentamt
European Patent Office
Office européen des brevets

(11) **EP 3 150 510 B1**

(12) **EUROPEAN PATENT SPECIFICATION**

(45) Date of publication and mention
of the grant of the patent:
**02.12.2020 Bulletin 2020/49**

(51) Int Cl.:
**B65D 65/40** *(2006.01)*      **B65D 1/00** *(2006.01)*
**B65D 85/72** *(2006.01)*      **B65D 1/02** *(2006.01)*

(21) Application number: **15800370.7**

(86) International application number:
**PCT/JP2015/063725**

(22) Date of filing: **13.05.2015**

(87) International publication number:
**WO 2015/182383 (03.12.2015 Gazette 2015/48)**

(54) **SUPPRESSING PERMEATION OF A LIQUID LAYER INTO AN UNDERLYING RESIN SURFACE**

UNTERDRÜCKUNG DES EINDRINGENS EINER FLÜSSIGKEITSSCHICHT IN EINE DARUNTERLIEGENDE HARZOBERFLÄCHE

SUPPRESSION DE LA PERMÉATION D'UN LIQUID DANS UNE SURFACE EN RÉSINE SOUS-JACENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.05.2014 JP 2014113483**

(43) Date of publication of application:
**05.04.2017 Bulletin 2017/14**

(73) Proprietor: **Toyo Seikan Group Holdings, Ltd.
Shinagawa-ku
Tokyo 141-8627 (JP)**

(72) Inventors:
• **IWAMOTO, Shinya
Yokohama-shi
Kanagawa 240-0062 (JP)**
• **AKUTSU, Yosuke
Yokohama-shi
Kanagawa 240-0062 (JP)**
• **OKAMOTO, Kota
Yokohama-shi
Kanagawa 240-0062 (JP)**

(74) Representative: **J A Kemp LLP
14 South Square
Gray's Inn
London WC1R 5JJ (GB)**

(56) References cited:
EP-A1- 2 873 630      EP-A1- 3 025 852
WO-A1-2014/010534   WO-A2-2012/100099
WO-A2-2013/022467   GB-A- 1 141 667
JP-A- 2005 059 958    JP-A- 2014 180 839
US-A1- 2013 251 952

**Description**

Technical Field:

This invention relates to a structural body and, specifically, to a container forming a liquid layer on the underlying surface of a resin.

Background Art:

Plastic materials are easy to form, can be easily formed into a variety of shapes and have, therefore, been widely used in a variety of applications. Specifically, bottles of which the inner wall surfaces are formed by using a polyester as represented by polyethylene terephthalate (PET) have been favorably used as containers for containing various kinds of beverages, edible oils, seasoning liquids and the like.

Here, the bottles for containing very highly viscous liquids must have an inner surface that exhibits highly slipping property to the content solutions such that the contents can be discharged quickly and completely up to the last drop without remaining in the bottles.

In recent years, there have been proposed various kinds of technologies for improving slipping properties to viscous substances by forming a liquid layer on the surface of a resin base material (e.g., see patent documents 1 and 2).

According to the above technologies, the slipping property can be strikingly improved as compared to the case of adding an additive such as lubricant to the resin that forms the surface of the base material, and attention has now been paid thereto.

However, the above-mentioned means for improving surface properties by forming the liquid layer on the resin surface, is accompanied by a problem or difficulty in sustaining the improved surface properties for extended periods of time. That is, the liquid forming the liquid layer gradually permeates and diffuses into the underlying resin layer and, as a result, improved surface properties extinguish with the passage of time.

In order to suppress the extinction of surface properties of the liquid layer with the passage of time, the present applicant has proposed the art of providing a liquid diffusion prevention layer in the inner surface of the container on the lower side of the underlying resin layer on which the liquid layer is formed to prevent the infiltration and diffusion of the liquid (JP-A-2013-109059).

Patent document 3 is concerned with the provision of a packing container featuring markedly improved slipping property and non-adhering property for the contents. In the packing container filled with a content, at least part of the surface that comes in contact with the content is a liquid-permeable surface which contains fine particles and holds a liquid (lubricating liquid) different from the content.

Patent document 4 is concerned with a resin structure comprising a resin formed body and a liquid layer formed on a surface of the resin formed body, the liquid layer having liquid protrusions that are locally protruded on the surface thereof. The structure exhibits improved properties on the surface of the resin formed body, such as improved sliding property and non-adhesiveness to various substances maintaining stability as a result of forming the liquid layer.

Prior Art Documents:

Patent Documents:

Patent document 1: WO2012/100099
Patent document 2: WO2013/022467
Patent document 3: WO2014010534 (later published in English language as EP2873630)
Patent document 4: EP3025852

Outline of the Invention:

Problems that the Invention is to Solve:

The object of the present invention is to effectively suppress the extinction of a liquid layer with the passage of time in a structural body that is forming the liquid layer on the underlying surface of a resin.

Means for Solving the Problems:

According to the present invention, there is provided the use of fine particles for suppressing permeation of a liquid layer into a resin forming an underlying surface of a structural body, wherein said liquid layer is held on the underlying surface of the resin of the structural body, wherein said fine particles are dispersed in the resin.

In the use of the present invention, it is desired that:

(1) The fine particles have a mesh particle size of not more than 20 $\mu$m;
(2) The fine particles are contained in an amount of 1 to 20 parts by mass per 100 parts by mass of the resin forming the underlying layer;
(3) The resin forming the underlying surface has a glass transition point (Tg) of not higher than 0°C;
(4) The resin forming the underlying surface is an olefin resin;
(5) The fine particles are fine metal oxide particles, fine carbonate particles or fine organic particles;
(6) The underlying surface of the resin is the inner surface of the container; and
(7) The underlying surface of the resin is at least part of the packing material.

Effects of the Invention:

In the structural body, an important feature resides in that the resin forming the underlying surface and holding the liquid layer is blended with fine particles that work to suppress the permeation of the liquid layer. That is, the fine particles are added to the resin so as to fill the gaps among the molecules in the amorphous portions. Therefore, the liquid forming the liquid layer is effectively prevented from permeating or diffusing into the underlying resin. As a result, the liquid layer is effectively suppressed from extinguishing with the passage of time.

The liquid that is applied on the surface of the resin starts permeating and diffusing into the resin through the gaps among the molecules in the amorphous portions. According to the present invention, however, the fine particles fill the gaps among the molecules in the amorphous portions that could become a cause of permeation and diffusion of the liquid in the underlying resin. Therefore, the liquid infiltrates into decreased regions in the underlying resin. Besides, the fine particles serve as obstacles against the liquid that has managed to infiltrate, and the resulting labyrinth effect lowers the rate of diffusion or permeation of the liquid. Further, the molecules of the resin coming in contact with the fine particles filled in the amorphous portions lose the freedom of motion. This suppresses the expansion of gaps among the molecules and, as a result, the liquid is effectively suppressed from permeating or diffusing into the underlying resin making it possible to effectively suppress the liquid layer formed on the underlying resin surface from extinguishing with the passage of time.

In the present invention as described above, the fine particles are added to the underlying resin to suppress the permeation of the liquid layer, the fine particles filling up amorphous portions in the resin.

As demonstrated in Examples and Comparative Examples appearing later, for example, when the medium-chain fatty acid triglyceride (MCT) is applied onto the surface of the underlying resin (low-density polyethylene), the amount of the medium-chain fatty acid triglyceride (MCT) distributed on the surface extinguishes with the passage of time and, after two days, extinguishes down to about 5% of the initial amount. On the other hand, when the fine silica particles (fine particles for filling up amorphous portions) are dispersed in the underlying layer and the medium-chain fatty acid triglyceride (MCT) is applied thereon in accordance with the present invention, the medium-chain fatty acid triglyceride (MCT) is maintained in an amount of not less than 17% of the initial amount even after the passage of two days. It is, therefore, learned that the permeation and diffusion of the liquid (medium-chain fatty acid triglyceride (MCT)) are suppressed.

In the present invention as described above, the liquid layer is suppressed from extinguishing with the passage of time relying on a very simple means of blending the underlying resin supporting the liquid layer with fine particles (fine particles filling up amorphous portions). It is, therefore, allowed to realize the structural body in a simple layer structure, for example, in a single layer structure offering an advantage of increased degree of freedom in the design of the structural body. For instance, it is also possible to effectively suppress the liquid layer from extinguishing with the passage of time by providing the interior of the structural body with a layer of a highly dense resin that works to prevent the diffusion of liquid. In this case, however, limitation is imposed on the layer structure of the structural body; i.e., the number of layers increases.

As described above, the structural body suppresses the liquid layer from extinguishing with the passage of time and, therefore, permits surface properties of the liquid layer to be exhibited for extended periods of time.

Therefore, by utilizing such properties, selecting the liquid layer of a suitable kind, and adapting the structural body to a container to form the liquid layer on the inner surface of the container, it is made possible to improve slipping property to viscous contents (e.g., ketchup, mayonnaise, etc.) and, therefore, to quickly discharge the content without leaving it on the inner surface of the container, i.e., to use almost all of the content contained in the container.

Brief Description of the Drawings:

[Fig. 1] is a view schematically showing a representative form of a structural body exhibiting the use of the present invention.
[Fig. 2] is a graph illustrating a change in the ratio of covering with liquid with the passage of time of when fine silica particles are used as fine particles for filling up amorphous portions.
[Fig. 3] is a graph illustrating a change in the ratio of covering with liquid with the passage of time of when fine calcium carbonate particles are used as fine particles for filling up amorphous portions.
[Fig. 4] is a graph illustrating a change in the ratio of covering with liquid with the passage of time of when fine crosslinked PMMA particles are used as fine particles for filling up amorphous portions.
[Fig. 5] is a graph illustrating a change in the ratio of covering with liquid with the passage of time of when fine zeolite particles are used as fine particles for filling up amorphous portions.

Modes for Carrying Out the Invention:

The structural body has a liquid layer formed on the underlying surface of a resin, and the liquid layer helps greatly improve properties of the surface of the underlying resin. The underlying resin is blended with fine particles that are for filling up amorphous portions.

1. Underlying resin;

In the structural body, the underlying resin forming the surface may be any thermoplastic resin or thermosetting resin that can be formed. Usually, however, a thermoplastic resin is used from such a standpoint that it can be easily formed and can be blended with large amounts of fine particles for filling up amorphous portions that will be described later.
As the thermoplastic resin, there can be exemplified the following resins.
Olefin resins, i.e., low-density polyethylene, high-density polyethylene, polypropylene, poly 1-butene, poly 4-methyl-1-pentene, or random or block copolymers of $\alpha$-olefins, such as ethylene, propylene, 1-butene or 4-methyl-1-pentene, or cyclic olefin copolymers;
Ethylene·vinyl copolymers, such as ethylene·vinyl acetate copolymer, ethylene·vinyl alcohol copolymer and ethylene·vinyl chloride copolymer;
Styrene resins, such as polystyrene, acrylonitrile· styrene copolymer, ABS, $\alpha$-methylstyrene·styrene copolymer;
Vinyl resins, such as polyvinyl chloride, polyvinylidene chloride, vinyl chloride- vinylidene chloride copolymer, methyl polyacrylate and methyl polymethacrylate;
Polyamide resins, such as nylon 6, nylon 6-6, nylon 6-10, nylon 11 and nylon 12;
Polyester resins, such as polyethylene terephthalate (PET), polybutylene terephthalate, polyethylene naphthalate and copolymerized polyesters thereof;
polycarbonate resins;
polyphenylene oxide resins; and
biodegradable resins, such as polylactic acid.
It is also allowable to use, as the underlying resin, a blend of the above thermoplastic resins so far as it does not impair the formability.
In the invention, among the above thermoplastic resins, it is desired to use, specifically, the one having a glass transition point (Tg) that is not higher than 0°C. If the glass transition point (Tg) is higher than the above temperature, the resin is in a vitreous state at room temperature (environmental temperature at which the structural body is used). Therefore, the liquid does not almost permeate or diffuse into gaps among the molecules in the amorphous portions. However, if the glass transition point (Tg) is not higher than the above temperature, the resin is in a rubbery state and molecules of the resin have a high degree of freedom allowing liquid to easily permeate and diffuse into gaps among the molecules in the amorphous portions. It is, therefore, necessary to add fine particles for filling up amorphous portions.
In the invention, further, it is desired that the glass transition point (Tg) of the resin forming the underlying surface for the liquid layer is not lower than -120°C. That is, if the glass transition point (Tg) is unnecessarily low, the rubbery elasticity of the resin becomes so large at room temperature (degree of freedom of the molecules increases and gap, too, increases among the molecules) that it becomes difficult to suppress permeation and diffusion of the liquid unless the fine particles are added in considerably large amounts to fill up amorphous portions as will be described later. As a result, properties such as formability of the resin are impaired.
By taking the above-mentioned points into consideration, when the structural body is to be adapted to the use of, specifically, containers, the olefin resin and the polyester resin are preferably used among the above-mentioned various thermoplastic resins. Particularly, when the structural body is used as a directly blow-formed bottle that is suited for discharging viscous contents, the olefin resin having a glass transition point (Tg) in the above-mentioned range is most desirably used as the underlying resin.

2. Fine particles for filling up amorphous portions;

As described earlier, the fine particles are added to the underlying resin to fill up amorphous portions. Namely, the fine particles fill the gaps among the molecules of the underlying resin, work to limit the molecular movement, and can be roughly divided into those of the inorganic type and those of the organic type.

As the inorganic fine particles for filling up amorphous portions, though not limited thereto only, there can be exemplified silica and calcium carbonate from the standpoint of cost and dispersion property in the resin. In addition to them, there can be also used metal oxides and carbonates of Mg, Zn, Fe, Al, Ti, Zr, etc.

As the organic fine particles for filling up amorphous portions, further, there can be exemplified a resin having a crosslinked structure, such as a crosslinked (meth)acrylate resin obtained by polymerizing a polyfunctional (meth)acrylic compound (a polymerizable monomer having 2 or 3 or more (meth)acryloyl groups). It is also allowable to use an inclusion compound such as cyclodextrin or the like.

The fine particles for filling up amorphous portions are added to the underlying resin to fill the gaps among the molecules of the underlying resin causing, therefore, a great decrease in the degree of freedom of molecular movement. The liquid layer formed on the underlying resin is thus effectively suppressed from permeating and diffusing in the underlying resin.

In the present invention, it is desired that the particle size (mesh size) of the fine particles filling up the amorphous portions is not more than 20 $\mu$m. That is, while the fine particles are being homogeneously dispersed in the underlying resin to fill up amorphous portions therein, the contact areas are increased between the fine particles and the underlying resin maximizing the effect of the fine particles for suppressing the molecular movement in the underlying resin.

It is desired that the fine particles for filling up amorphous portions are added in large amounts in a range in which they do not impair the formability of the underlying resin, i.e., are added in amounts of 1 to 60 parts by mass and, specifically, 1 to 10 parts by mass per 100 parts by mass of the underlying resin. Upon being added in such amounts to the underlying resin, the fine particles exhibit the effect of suppressing the liquid from permeating and diffusing into the underlying resin without impairing the formability of the underlying resin.

3. Liquid layer;

In the invention, the liquid layer is formed on the surface of the underlying resin that is blended with the fine particles for filling up amorphous portions to improve surface properties of the structural body. If the structural body is used in the form of, for example, a container, the liquid layer is formed on the inner surface side. This imparts slipping property and water-repelling property depending on the kind of the liquid forming the liquid layer, and the content in the container can be quickly discharged.

The liquid forming the liquid layer, as a matter of course, has a small vapor pressure under atmospheric pressure and is non-volatile. Namely, the liquid layer is formed by using a high-boiling liquid having a boiling point of, for example, not lower than 200°C. If formed by using a volatile liquid, then the liquid layer easily volatilizes and extinguishes with the passage of time though dependent on the mode of use, or it becomes difficult to form the liquid layer.

For forming the liquid layer, there can be concretely exemplified various kinds of liquids provided they are high-boiling liquids as described above. Specifically, to impart water-repelling property and slipping property to water and hydrophilic contents that contain water, there can be exemplified fluorine-contained surfactant, silicone oil, fatty acid triglyceride and various plant oils. Plant oils are soy bean oil, rape oil, olive oil, rice oil, corn oil, safflower oil, sesame oil, palm oil, castor oil, avocado oil, coconut oil, almond oil, walnut oil, hazel oil and salad oil.

By using these liquids, the liquid layer is formed in a liquid amount of, usually, 0.1 to 50 g/m$^2$, preferably, 0.1 to 30 g/m$^2$, more preferably, 0.2 to 30 g/m$^2$ and, particularly preferably, 0.2 to 10 g/m$^2$ though dependent on the desired surface properties and the kind of the liquid. This is because if the liquid amount is small, surface properties cannot be imparted to a sufficient degree. If the liquid amount is too large, on the other hand, the liquid tends to split off. Namely, the liquid amount greatly varies and the surface properties cannot be stably maintained.

The liquid layer can be easily formed on the surface of the underlying resin blended with the fine particles for filling up amorphous portions by such means as spraying the liquid, dipping, spin coating or roll coating depending on the form of the structural body.

In this case, in the invention, fine ruggedness has been formed on the surface of the underlying resin that is blended with the fine particles for filling up amorphous portions and, as a result, the liquid layer does not split off but is stably held.

4. Layer structure of the structural body;

The structural body has no limitation on the layer structure thereof so far as the liquid layer is formed on the surface of the underlying resin that is blended with the fine particles for filling up amorphous portions.

For instance, the structural body, desirably, has the liquid layer on the single-layer structure comprising the underlying resin only. This is the simplest structure yet exhibiting the advantage of the invention. Not being limited to the above structure only, however, it is also allowable to form an underlying resin layer by applying the underlying resin to a glass, a metal or a paper, or a multilayered structure by laminating it on other resin layer.

As the multilayered structure, there can be exemplified a structure obtained by laminating, via a suitable adhesive resin layer, an oxygen-barrier layer or an oxygen-absorbing layer on the underlying resin layer on which the liquid layer has been formed but on the side opposite to the liquid layer and, further, laminating thereon the resin of the same kind as the underlying resin.

The oxygen-barrier layer in the above multilayered structure is formed by using an oxygen-barrier resin such as ethylene-vinyl alcohol copolymer or polyamide, and may be blended with other thermoplastic resin so far as its oxygen-barrier property is not impaired.

The oxygen-absorbing layer contains, as described in JP-A-2002-240813, an oxidizing polymer and a transition metal catalyst, and in which the oxidizing polymer is oxidized with oxygen by the action of the transition metal catalyst to thereby absorb oxygen and interrupt the permeation of oxygen. The oxidizing polymer and the transition metal catalyst have been closely described in the above JP-A-2002-240813 and, therefore, are not described here in detail. Representative examples of the oxidizing polymer, however, include olefin resins having a tertiary carbon atom (e.g., polypropylene, polybutene-1, and a copolymer thereof), thermoplastic polyester and aliphatic polyamide; xylylene group-containing polyamide resin; and ethylenically unsaturated group-containing polymers (e.g., polymers derived from polyene such as butadiene). As the transition metal catalyst, further, there can be represented inorganic salts, organic salts or complexes of transition metals such as iron, cobalt, nickel, etc.

Further, the adhesive resins used for adhering the layers have been known per se., as represented by olefin resins graft-modified with a carboxylic acid such as maleic acid, itaconic acid or fumaric acid or anhydride thereof, amide or ester; ethylene-acrylic acid copolymer; ionically crosslinked olefin copolymer; and ethylene-vinyl acetate copolymer.

The thicknesses of the above layers may be suitably set depending on the properties required for each of the layers.

It is, further, possible to provide, as an inner layer, a reground resin layer by using a blend of a virgin resin such as olefin resin and scraps such as burrs generated at the time of forming the above-mentioned multilayered structural body.

5. Form of the structural body;

The structural body can assume various forms. Specifically, by selecting a liquid that forms the liquid layer, it is allowed to improve the slipping property to the viscous fluid substances. It is, therefore, desired that the structural body is used in the form of a packing material such as packing containers, lid materials and caps.

There is no particular limitation on the form of the container which, therefore, may assume the form of cup, bottle, bag (pouch), syringe, pot, tray or the like, and may, further, have been stretch-formed.

To obtain the container, a preform having the above-mentioned underlying surface is formed by a method known per se., and to which a film is stuck by heat-sealing. Next, the preform is subjected to an after-treatment such as vacuum forming like plug-assist forming or blow-forming to form it into a container. Further, as briefly described above, a liquid for forming the liquid layer is applied onto the underlying surface which is the inner surface by such means as spray or dipping depending on the form of the container to thereby obtain the container having the liquid layer on the inner surface thereof.

In blow-forming the container, it is also allowable to supply the liquid simultaneously with the blow-forming to form a thin liquid layer evenly over the whole underlying resin surface (whole inner surface of the container).

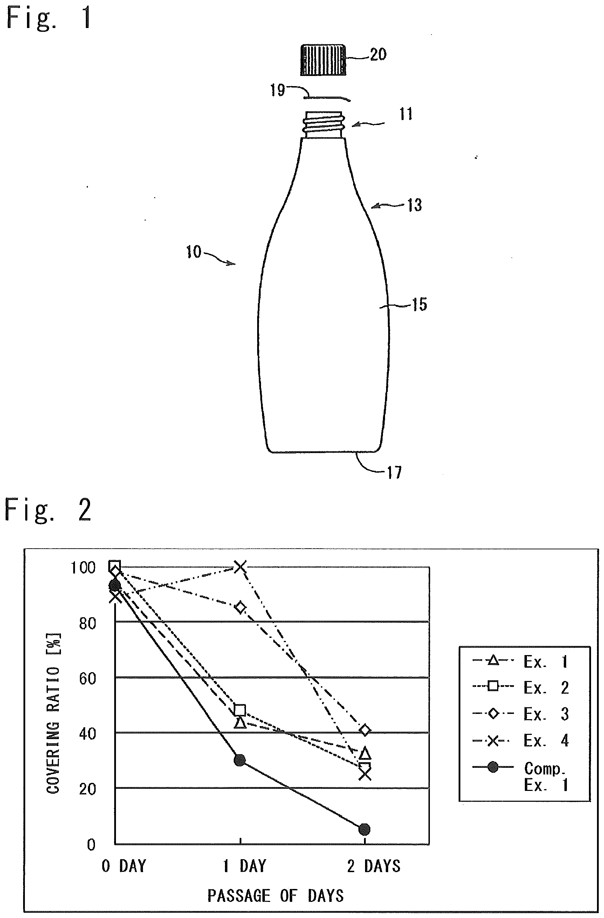

Fig. 1 shows a directly blow-formed bottle exhibiting the most preferred embodiment of the use of the present invention.

Namely, in Fig. 1, the bottle generally designated at 10 comprises a neck portion 11 having a screw thread, a body wall 15 continuous to the neck portion 11 via a shoulder portion 13, and a bottom wall 17 closing the lower end of the body wall 15. The above-mentioned liquid layer is formed on the inner surface of the bottle 10 which is filled with a viscous content.

The bottle 10 has the liquid layer formed on the surface (i.e., on the inner surface) of the underlying resin blended with fine particles for filling up amorphous portions. The liquid layer exhibits its surface properties to a sufficient degree. Therefore, the bottle is best suited for containing, specifically, viscous contents having a viscosity (25°C) of not less than 100 mPa·s, such as ketchup, aqueous paste, honey, sauces, mayonnaise, mustard, dressing, jam, chocolate syrup, yogurt, cosmetic solution like milky lotion, liquid detergent, shampoo, rinse and the like. That is, by forming the liquid layer using a suitable liquid depending on the kind of the content, the bottle 10 may be inclined or inverted to quickly discharge the content without permitting it to stay on the inner wall of the container. By squeezing the bottle 10, further, it is allowed to use almost all of the viscous content contained in the bottle without leaving it in the container.

For instance, ketchup, sauces, honey, mayonnaise, mustard, jam, chocolate syrup, yogurt, milky lotion and the like are hydrophilic substances containing water. As the liquid for forming the liquid layer for them, there can be favorably used oily liquids approved as foodstuff additives, such as silicone oil, glycerin fatty acid ester and edible oil.

The above-mentioned bottle 10 effectively suppresses the liquid layer from being extinguished with the passage of time even if the bottle is formed in a single-layer structure by using the olefin resin (e.g., low-density polyethylene) as the underlying resin and forming the liquid layer thereon. This is the greatest advantage of the present invention.

EXAMPLES

The invention will now be described by way of the following Experimental Examples.

1. Measuring the ratio of covering with liquid.

Under a condition of 23°C50%RH and by using the solid-liquid interface analyzer system (DropMaster 700, manufactured by Kyowa Kaimen Kagaku Co.)), a film prepared by a method described later was fixed onto a test plate in a manner that the surface forming the liquid film was facing upward. 3 $\mu$L of pure water was placed on the film, and the water contact angle $\theta$ was measured immediately thereafter, 1 day thereafter and 2 days thereafter. By using the obtained water contact angle, a ratio F of covering with the lubricating liquid on the inner surface of the bottle was found according to the following formula (1),

$$F = (\cos\theta - \cos\theta_B)/(\cos\theta_A - \cos\theta_B) \qquad (1)$$

wherein $\theta$ is a water contact angle on the surface of the film prepared by the method described later and on which the liquid film is formed,

$\theta_A$ is a water contact angle on the oily liquid forming the liquid film as measured under the atmospheric pressure, and

$\theta_B$ is a water contact angle on the film supporting the liquid film as measured under the atmospheric pressure.

In finding the ratio F of covering with the oily liquid, the following water contact angles were used as the values $\theta$A and $\theta_B$.

$\theta_A$: 80.3° (value of a medium-chain fatty acid triglyceride on a liquid film)

$\theta_B$: water contact angle measured by using a film of before forming the liquid film.

<Example 1>

As the underlying resin, there was provide a low-density polyethylene (LDPE) having a glass transition point (Tg) of -120°C.

As the fine particles for filling up amorphous portions, further, there were provided fine silica particles having a mesh particle size of not more than 20 $\mu$m and a mean particle size (as measured by the laser diffraction light scattering method) of not more than 10 $\mu$m.

By using the Laboplusto-mill, the LDPE was fed to an extruder A and a resin composition of LDPE/fine silica particles = 99/1 (weight ratio) was fed to an extruder B. These resins were extruded through a ring die head maintained at a temperature of 210°C to prepare a two-layer film of a cylindrical shape comprising the LDPE on the inside and the resin blended with fine particles (resin composition of LDPE/fine silica particles) on the outside. The thickness of the film was measured by using a microscope; i.e., the LDPE layer on the inside was about 60 $\mu$m thick and the resin layer blended with the fine particles on the outside was about 70 $\mu$m thick, the total thickness thereof being about 130 $\mu$m.

A piece measuring 120 mm x 120 mm was cut out from the two-layer film and was attached to a rotary plate of a spin coater in a manner that the resin layer blended with the fine particles was facing upward. As the lubricating liquid, the medium-chain fatty acid triglyceride (MCT) (surface tension; 28.8 mN/m, viscosity; 33.8 mPa·s) was applied thereon by using the spin coater (5000 rpm, 60 sec.). The amount of MCT applied was calculated from a change in the weight of the film before and after the MCT was applied. The film was, further, measured for a ratio of covering with the liquid. The results were as shown in Table 1.

<Example 2>

A film was prepared in the same manner as in Example 1 but setting the weight ratio of LDPE/fine silica particles to be 97/3. The film was coated with the liquid and was measured for a ratio of covering with the liquid. The results were as shown in Table 1.

<Example 3>

A film was prepared in the same manner as in Example 1 but setting the weight ratio of LDPE/fine silica particles to be 95/5. The film was coated with the liquid and was measured for a ratio of covering with the liquid. The results were as shown in Table 1.

<Example 4>

A film was prepared in the same manner as in Example 1 but setting the weight ratio of LDPE/fine silica particles to be 90/10. The film was coated with the liquid and was measured for a ratio of covering with the liquid. The results were as shown in Table 1.

<Example 5>

A film was prepared in the same manner as in Example 1 but changing the fine particles for filling up amorphous portions into fine particles of heavy calcium carbonate (mean particle size: 2 $\mu$m). The film was coated with the liquid and was measured for a ratio of covering with the liquid. The results were as shown in Table 1.

<Example 6>

A film was prepared in the same manner as in Example 2 but changing the fine particles for filling up amorphous portions into fine particles of heavy calcium carbonate (mean particle size: 2 $\mu$m). The film was coated with the liquid and was measured for a ratio of covering with the liquid. The results were as shown in Table 1.

<Example 7>

A film was prepared in the same manner as in Example 3 but changing the fine particles for filling up amorphous portions into fine particles of heavy calcium carbonate (mean particle size: 2 $\mu$m). The film was coated with the liquid and was measured for a ratio of covering with the liquid. The results were as shown in Table 1.

<Example 8>

A film was prepared in the same manner as in Example 4 but changing the fine particles for filling up amorphous portions into fine particles of heavy calcium carbonate (mean particle size: 2 $\mu$m). The film was coated with the liquid and was measured for a ratio of covering with the liquid. The results were as shown in Table 1.

<Example 9>

A film was prepared in the same manner as in Example 1 but changing the fine particles for filling up amorphous portions into fine particles of crosslinked PMMA (mean particle size: 10 $\mu$m). The film was coated with the liquid and was measured for a ratio of covering with the liquid. The results were as shown in Table 1.

<Example 10>

A film was prepared in the same manner as in Example 2 but changing the fine particles for filling up amorphous portions into fine particles of crosslinked PMMA (mean particle size: 10 $\mu$m). The film was coated with the liquid and was measured for a ratio of covering with the liquid. The results were as shown in Table 1.

<Example 11>

A film was prepared in the same manner as in Example 3 but changing the fine particles for filling up amorphous portions into fine particles of crosslinked PMMA (mean particle size: 10 $\mu$m). The film was coated with the liquid and was measured for a ratio of covering with the liquid. The results were as shown in Table 1.

<Example 12>

A film was prepared in the same manner as in Example 4 but changing the fine particles for filling up amorphous portions into fine particles of crosslinked PMMA (mean particle size: 10 $\mu$m). The film was coated with the liquid and was measured for a ratio of covering with the liquid. The results were as shown in Table 1.

<Example 13>

A film was prepared in the same manner as in Example 1 but changing the fine particles for filling up amorphous portions into fine particles of crosslinked PMMA (mean particle size: 10 $\mu$m) and setting the weight ratio of LDPE/fine particles of crosslinked PMMA to 85/15. The film was coated with the liquid and was measured for a ratio of covering with the liquid. The results were as shown in Table 1.

<Example 14>

A film was prepared in the same manner as in Example 1 but changing the fine particles for filling up amorphous portions into fine zeolite particles (fine 3A particles) . The film was coated with the liquid and was measured for a ratio of covering with the liquid. The results were as shown in Table 1.

<Example 15>

A film was prepared in the same manner as in Example 2 but changing the fine particles for filling up amorphous portions into fine zeolite particles (fine 3A particles) . The film was coated with the liquid and was measured for a ratio of covering with the liquid. The results were as shown in Table 1.

<Example 16>

A film was prepared in the same manner as in Example 3 but changing the fine particles for filling up amorphous portions into fine zeolite particles (fine 3A particles). The film was coated with the liquid and was measured for a ratio of covering with the liquid. The results were as shown in Table 1.

<Example 17>

A film was prepared in the same manner as in Example 4 but changing the fine particles for filling up amorphous portions into fine zeolite particles (fine 3A particles). The film was coated with the liquid and was measured for a ratio of covering with the liquid. The results were as shown in Table 1.

<Comparative Example 1>

A film was prepared in the same manner as in Example 1 but feeding the LDPE to both the extruders A and B. The film was coated with the liquid and was measured for a ratio of covering with the liquid. The results were as shown in Table 1.

| Table 1 | | | | | | | | | |
|---|---|---|---|---|---|---|---|---|---|
| | Underlying resin | | | | Liquid film | | Covering ratio [%] | | |
| | Base resin | Particles | Particle size [$\mu$m] | Concentration [wt%] | Liquid | Amount [g/m$^2$] | 0 day | 1 day | 2 days |
| Example 1 | LDPE | *1 | 10 | 1 | MCT | 0.29 | 94 | 44 | 33 |
| Example 2 | ↑ | ↑ | ↑ | 3 | ↑ | 0.42 | 100 | 48 | 27 |
| Example 3 | ↑ | ↑ | ↑ | 5 | ↑ | 0.42 | 98 | 85 | 41 |
| Example 4 | ↑ | ↑ | ↑ | 10 | ↑ | 0.49 | 89 | 100 | 25 |
| Example 5 | LDPE | *2 | 2 | 1 | MCT | 0.34 | 94 | 32 | 17 |

(continued)

| | Underlying resin | | | | Liquid film | | Covering ratio [%] | | |
|---|---|---|---|---|---|---|---|---|---|
| | Base resin | Particles | Particle size [μm] | Concentration [wt%] | Liquid | Amount [g/m²] | 0 day | 1 day | 2 days |
| Example 6 | ↑ | ↑ | ↑ | 3 | ↑ | 0.31 | 100 | 32 | 18 |
| Example 7 | ↑ | ↑ | ↑ | 5 | ↑ | 0.40 | 100 | 37 | 19 |
| Example 8 | ↑ | ↑ | ↑ | 10 | ↑ | 0.33 | 96 | 92 | 16 |
| Example 9 | LDPE | *3 | 10 | 1 | MCT | 0.35 | 95 | 47 | 40 |
| Example 10 | ↑ | ↑ | ↑ | 3 | ↑ | 0.39 | 93 | 45 | 42 |
| Example 11 | ↑ | ↑ | ↑ | 5 | ↑ | 0.48 | 94 | 63 | 42 |
| Example 12 | ↑ | ↑ | ↑ | 10 | ↑ | 0.47 | 96 | 96 | 48 |
| Example 13 | ↑ | ↑ | ↑ | 15 | ↑ | 0.39 | 96 | 96 | 84 |
| Example 14 | LDPE | *4 | - | 1 | MCT | 0.35 | 91 | 49 | 30 |
| Example 15 | ↑ | ↑ | ↑ | 3 | ↑ | 0.39 | 93 | 46 | 29 |
| Example 16 | ↑ | ↑ | ↑ | 5 | ↑ | 0.49 | 95 | 89 | 47 |
| Example 17 | ↑ | ↑ | ↑ | 10 | ↑ | 0.46 | 96 | 88 | 41 |
| Comp. Ex. 1 | LDPE | none | - | - | ↑ | 0.41 | 93 | 30 | 5 |
| *1: fine silica particles, *2: fine Calcium carbonate particles, | | | | | | | | | |
| *3: fine crosslinked PMMA particles, *4: fine zeolite particles | | | | | | | | | |

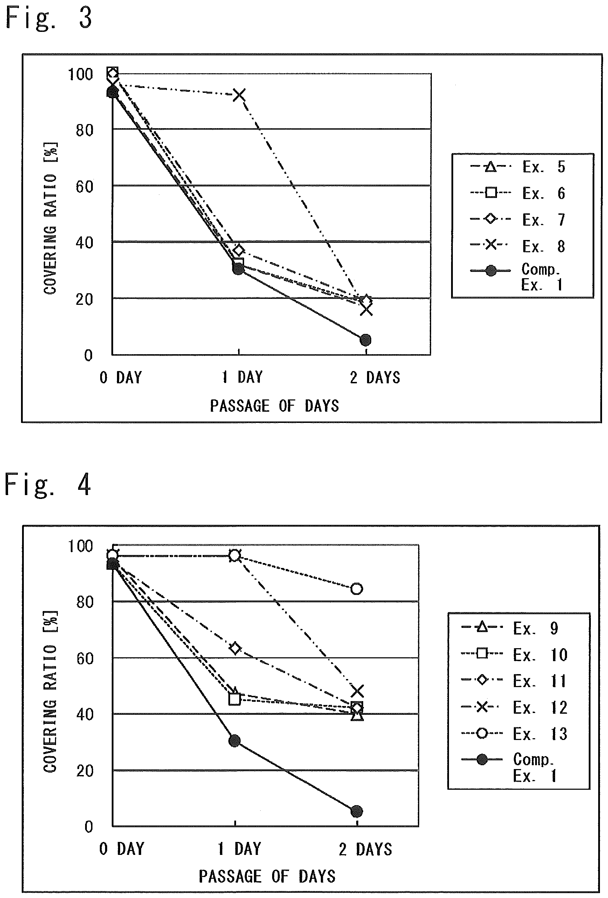

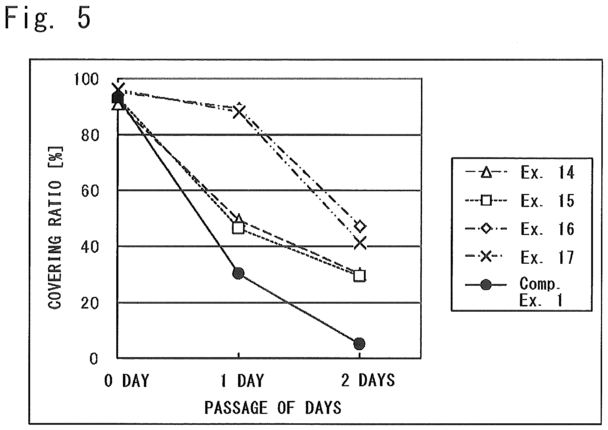

Figs. 2, 3, 4 and 5 show changes in the ratio of covering with liquid with the passage of time of when the fine silica particles, fine calcium carbonate particles, fine particles of crosslinked PMMA and fine zeolite particles are used as fine particles for filling up amorphous portions. When no fine particle is added (Comparative Example 1), the ratio of covering with liquid decreases with the passage of time. Namely, the ratio of covering that used to be not less than 90% decreases down to about 5% after two days presumably due to that the liquid has permeated and diffused into the resin. When the fine particles are added to fill up amorphous portions, on the other hand, the ratio of covering with liquid changes little irrespective of the kind of the fine particles, and the ratio of covering of not less than 16% is maintained after two days. From the above results, it is learned that addition of the fine particles for filling up amorphous portions makes it possible to suppress the liquid from permeating or diffusing into the resin.

Description of Reference Numerals:

10:    bottle
11:    neck portion
13:    shoulder portion
15:    body wall
17:    bottom wall

**Claims**

1.  Use of fine particles for suppressing permeation of a liquid layer into a resin forming an underlying surface of a structural body, wherein said liquid layer is held on the underlying surface of the resin of the structural body, wherein said fine particles are dispersed in the resin.

2.  Use according to claim 1, wherein the fine particles have a mesh particle size of not more than 20 $\mu$m.

3.  Use according to claim 1 or 2, wherein the fine particles are contained in an amount of 1 to 20 parts by mass per 100 parts by mass of the resin forming the underlying layer.

4.  Use according to any one of the preceding claims, wherein the resin forming the underlying surface has a glass transition point (Tg) of not higher than 0°C.

5.  Use according to any one of the preceding claims, wherein the resin forming the underlying surface is an olefin resin.

6.  Use according to any one of the preceding claims, wherein the fine particles are fine metal oxide particles, fine carbonate particles or fine organic particles.

7.  Use according to any one of the preceding claims, wherein the underlying surface of the resin is an inner surface of a container.

8.  Use according to any one of the preceding claims, wherein the underlying surface of the resin is at least part of a packing material.


**Patentansprüche**

1.  Verwendung von Feinteilchen zum Unterdrücken von Permeation einer Flüssigkeitsschicht in ein Harz, das einen Untergrund eines Strukturkörpers bildet, wobei die Flüssigkeitsschicht auf dem Untergrund des Harzes des Strukturkörpers gehalten wird, wobei die Feinteilchen im Harz dispergiert werden.

2.  Verwendung nach Anspruch 1, wobei die Feinteilchen eine Mesh-Teilchengröße von nicht mehr als 20 $\mu$m haben.

3.  Verwendung nach Anspruch 1 oder 2, wobei die Feinteilchen in einer Menge von 1 bis 20 Masseteilen pro 100 Masseteilen des Harzes, das den Untergrund bildet, enthalten sind.

4.  Verwendung nach einem der vorhergehenden Ansprüche, wobei das Harz, das den Untergrund bildet, einen Glasübergangspunkt (Tg) von nicht höher als 0 °C hat.

5.  Verwendung nach einem der vorhergehenden Ansprüche, wobei das Harz, das den Untergrund bildet, ein Olefinharz ist.

6.  Verwendung nach einem der vorhergehenden Ansprüche, wobei die Feinteilchen feine Metalloxidteilchen, feine Carbonatteilchen oder feine organische Teilchen sind.

7.  Verwendung nach einem der vorhergehenden Ansprüche, wobei der Untergrund aus dem Harz eine Innenfläche eines Behälters ist.

8.  Verwendung nach einem der vorhergehenden Ansprüche, wobei der Untergrund des Harzes mindestens Teil eines Verpackungsmaterials ist.


**Revendications**

1.  Utilisation de particules fines pour supprimer la perméation d'une couche liquide dans une résine formant une surface sous-jacente d'un corps structurel, dans laquelle ladite couche liquide est retenue sur la surface sous-jacente de la résine du corps structurel, dans laquelle lesdites particules fines sont dispersées dans la résine.

**2.** Utilisation selon la revendication 1, dans laquelle les particules fines ont une taille des particules non supérieure à 20 μm.

**3.** Utilisation selon la revendication 1 ou 2, dans laquelle les particules fines sont contenues en une quantité d' 1 à 20 parties en masse par 100 parties en masse de la résine formant la couche sous-jacente.

**4.** Utilisation selon l'une quelconque des revendications précédentes, dans laquelle la résine formant la surface sous-jacente a un point de transition vitreuse (Tg) non supérieur à 0°C.

**5.** Utilisation selon l'une quelconque des revendications précédentes, dans laquelle la résine formant la surface sous-jacente est une résine d'oléfine.

**6.** Utilisation selon l'une quelconque des revendications précédentes, dans laquelle les particules fines sont des particules fines d'oxyde de métal, des particules fine de carbonate ou des particules fines organiques.

**7.** Utilisation selon l'une quelconque des revendications précédentes, dans laquelle la surface sous-jacente de la résine est une surface intérieure d'un contenant.

**8.** Utilisation selon l'une quelconque des revendications précédentes, dans laquelle la surface sous-jacente de la résine est au moins une partie d'un matériau de conditionnement.

Fig. 1

Fig. 2

## Fig. 3

## Fig. 4

Fig. 5

**REFERENCES CITED IN THE DESCRIPTION**

**Patent documents cited in the description**

- JP 2013109059 A
- WO 2012100099 A
- WO 2013022467 A
- WO 2014010534 A
- EP 2873630 A
- EP 3025852 A
- JP 2002240813 A